**Europäisches Patentamt**

**European Patent Office**

**Office européen des brevets**

(19)

(11) Veröffentlichungsnummer : **0 343 418 B1**

# (12) EUROPÄISCHE PATENTSCHRIFT

(45) Veröffentlichungstag der Patentschrift :
**20.05.92 Patentblatt 92/21**

(51) Int. Cl.$^5$ : **C09C 1/36,** C01G 23/053,
C22B 34/12

(21) Anmeldenummer : **89108213.3**

(22) Anmeldetag : **06.05.89**

(54) Verfahren zum Herstellen von Titandioxid.

(30) Priorität : **21.05.88 DE 3817445**

(43) Veröffentlichungstag der Anmeldung :
**29.11.89 Patentblatt 89/48**

(45) Bekanntmachung des Hinweises auf die
Patenterteilung :
**20.05.92 Patentblatt 92/21**

(84) Benannte Vertragsstaaten :
**BE DE ES FR GB IT NL**

(56) Entgegenhaltungen :
**EP-A- 0 356 693**
**GB-A- 1 052 188**
**US-A- 2 999 011**
**US-A- 4 113 840**

(73) Patentinhaber : **BAYER AG**
**W-5090 Leverkusen 1 Bayerwerk (DE)**

(72) Erfinder : **Lailach, Günter, Dr.**
**Bismarckstrasse 109**
**W-4150 Krefeld (DE)**
Erfinder : **Gerken, Rudolf, Dr.**
**Ratherstrasse 79**
**W-4150 Krefeld (DE)**

EP 0 343 418 B1

Jouve, 18, rue Saint-Denis, 75001 PARIS

## Beschreibung

Die vorliegende Erfindung betrifft ein Verfahren zum Herstellen von Titandioxid durch Aufschluß titanhaltiger Rohstoffe mit Schwefelsäure, Hydrolyse des dabei gebildeten Titanylsulfates, Abtrennen der metallsulfathaltigen Schwefelsäure von dem bei der Hydrolyse gebildeten Titanoxidhydrat, Bleiche des Titanoxidhydrates durch reduzierende Behandlung in Gegenwart von Schwefelsäure, Kalzinierung des gebleichten Titanoxidhydrates zum Titandioxid und Entschwefelung der $SO_2$-haltigen Abgase des Prozesses an feuchter Aktivkohle unter Bildung von 5 bis 20 %iger Schwefelsäure.

Die Bemühungen der Titandioxidproduzenten, die nach dem sogenannten Sulfatverfahren arbeiten, zur Verbesserung der Verfahren aus ökologischer Sicht betreffen vor allem die Abwasserseite. Für die Aufarbeitung der sogenannten Dünnsäure werden verschiedene Verfahren vorgeschlagen (US-A 2 098 056, DE-D 1 173 074, EP-B 133 505). Um die Kosten dieser Aufarbeitungsprozesse so gering wie möglich zu halten, wird durch Rückführen verdünnter Fraktionen der metallsulfathaltigen Schwefelsäure in den Prozeß angestrebt, die Konzentration der für die Aufarbeitung vorgesehen Fraktion möglichst hoch zu halten (DE-C 2 729 755, EP-B 133 505).

Zur Reduzierung von $SO_2$ in Abgasen der Titandioxid-Kalzinierung sind Verfahren bekannt, bei denen $SO_2$ an feuchter Aktivkohle zu Schwefelsäure umgesetzt wird, die mit Wasser als 5 bis 20%ige verdünnte Säure aus der Aktivkohle ausgewaschen wird. (Lurgi Schnellinformation C 1217/12, 76, Seiten 6 bis 11).

Für solche zwar reine, aber stark verdünnte Schwefelsäure gibt es bisher kaum Verwendungsmöglichkeiten. Der Einsatz beim $TiO_2$-Rohstoffaufschluß oder bei der Titanylsulfathydrolyse anstatt Wasser führt letztlich dazu, daß die einzudampfende Menge rückgeführter 20 bis 25%iger metallsulfathaltiger Dünnsäure vergrößert wird und bedeutet somit eine wesentliche Belastung des Prozesses.

Ziel der vorliegenden Erfindung ist es deshalb, ein Verfahren zur ökonomisch und ökologisch vorteilhaften Herstellung von Titandioxid zur Verfügung zu stellen, bei dem die Abgase aus der Titanoxidhydratkalzinierung und gegebenenfalls aus dem Titanrohstoffauschluß an feuchter Aktivkohle weitgehend von $SO_2$ befreit werden unter Bildung von 5 bis 20 %iger Schwefelsäure, die bei der Titandioxidproduktion ohne Belastung der Dünnsäure- oder Abwasserbilanz wieder eingesetzt werden kann.

Dieses erfindungsgemäße Ziel wird dadurch erreicht, daß die bei der Entschwefelung der Abgase anfallende 5 bis 20 %ige Schwefelsäure ohne vorherige Konzentration zusammen mit technisch reiner ca. 96 %iger Schwefelsäure bei der reduzierenden Behandlung des Titanoxidhydrates zur Entfernung von Schwermetallionen, auch Bleiche genannt, eingesetzt wird.

Gegenstand der vorliegenden Erfindung ist somit ein Verfahren zum Herstellen von Titandioxid durch Aufschluß titanhaltiger Rohstoffe mit Schwefelsäure, Hydrolyse des dabei gebildeten Titanylsulfates, Abtrennen der metallsulfathaltigen Schwefelsäure von dem bei der Hydrolyse gebildeten Titanoxidhydrat, Bleiche des Titanoxidhydrates durch reduzierende Behandlung in Gegenwart von Schwefelsäure, Kalzinierung des gebleichten Titanoxidhydrates zum Titandioxid und Entschwefelung der $SO_2$-haltigen Abgase des Prozesses an feuchter Aktivkohle unter Bildung von 5 bis 20 %iger Schwefelsäure, dadurch gekennzeichnet, daß als Schwefelsäure bei der Bleiche die bei der Entschwefelung der Abgase gebildete 5 bis 20 %ige Schwefelsäure zusammen mit technisch reiner konzentrierter Schwefelsäure eingesetzt wird.

Es wurde gefunden, daß die gesamte Menge der bei der Abgasentschwefelung anfallenden Schwefelsäure erfindungsgemäß bei der Bleiche eingesetzt werden kann. Demzufolge wird das auf geeigneten Filteranlagen, z.B. Moore-Filtern, sulfatfrei gewaschene Titandioxidhydrat in der vorgelegten 5 bis 20%igen Schwefelsäure suspendiert und diese Suspension danach mit so viel konzentrierter Schwefelsäure versetzt, daß die für die Bleiche erforderliche Schwefelsäurekonzentration resultiert. Die eigentliche Bleiche unter Einsatz von Reduktionsmitteln erfolgt dann auf bekannte Weise, z.B. mit Al- oder Zn-Pulver oder mit Natriumformaldehydsulfoxylat.

In einer besonders bevorzugten Ausführungsform des erfindungsgemäßen Verfahrens werden 10 bis 50 % der Schwefelsäure in Form der 5 bis 20 %igen Schwefelsäure eingesetzt.

Im folgenden wird die Erfindung beispielhaft erläutert, ohne daß hierin eine Einschränkung gesehen werden soll.

Vergleichsbeispiel

3,75 t Filterkuchen mit 1,31 t Feststoff ($SO_4^{-2}$-haltiges Titanoxidhydrat), entsprechend 1 t $TiO_2$, werden nach dem Auswaschen der Metallsulfate in 524 l Wasser suspendiert und mit 253 kg technisch reiner 96 %iges Schwefelsäure versetzt. Anschließend wird die Bleiche des Filterkuchens durch Zugabe von Reduktionsmitteln, z.B. Aluminiumpulver, bewirkt.

Beispiel

3,75 t Filterkuchen (wie im Vergleichsbeispiel) werden in 608 kg 13,2 %iger Schwefelsäure suspendiert und mit 170 kg technisch reiner 96 %iges Schwefelsäure versetzt und wie oben gebleicht.

Der Verbrauch an 96 %iges Schwefelsäure ist 33% geringer als im Vergleichsbeispiel, obwohl die Suspension vor der Zugabe des Reduktionsmittels die gleiche Zusammensetzung hat.

Die 13,2 %ige Schwefelsäure enthält 80 kg $H_2SO_4$. Das entspricht der Gesamtmenge der Schwefelsäure, die maximal durch Entschwefelung der Kalziniergase gewonnen werden kann, die bei der Kalzinierung von 1 t $TiO_2$ anfallen. Diese Schwefelsäure wird dadurch gebildet, daß die bei der Kalzinierung des Titanoxidhydrats anfallenden $SO_2$-haltigen Kalziniergase nach einer Wäsche mit Wasser durch eine Schicht feuchter Aktivkohle geleitet werden.

In der Aktivkohleschicht wird $SO_2$ mit $O_2$ und $H_2O$ zu $H_2SO_4$ umgesetzt. Die Kohleschicht wird mit so viel Wasser besprüht, daß eine 13,2 %ige Schwefelsäure abfließt.

**Patentansprüche**

1. Verfahren zum Herstellen von Titandioxid durch Aufschluß titanhaltiger Rohstoffe mit Schwefelsäure, Hydrolyse des dabei gebildeten Titanylsulfats, Abtrennen der metallsulfathaltigen Schwefelsäure von dem bei der Hydrolyse gebildeten Titanoxidhydrat, Bleiche des Titanoxidhydrats durch reduzierende Behandlung in Gegenwart von Schwefelsäure, Kalzinierung des gebleichten Titanoxidhydrats zum Titandioxid und Entschwefelung der $SO_2$-haltigen Abgase des Prozesses an feuchter Aktivkohle unter Bildung von 5 bis 20 %iger Schwefelsäure, dadurch gekennzeichnet, daß als Schwefelsäure bei der Bleiche die bei der Entschwefelung der Abgase gebildete 5 bis 20 %ige Schwefelsäure zusammen mit technisch reiner konzentrierter Schwefelsäure eingesetzt wird.

2. Verfahren gemäß Anspruch 1, dadurch gekennzeichnet, daß 10 bis 50 % der Schwefelsäure in Form der 5 bis 20 %igen Schwefelsäure eingesetzt werden.

**Claims**

1. A method of producing titanium dioxide by treatment of titanium-containing raw materials with sulphuric acid, hydrolysis of the resulting titanyl sulphate, separation of the metal sulphate-containing sulphuric acid from the hydrated titanium oxide formed during hydrolysis, bleaching of the hydrated titanium oxide by reducing treatment in the presence of sulphuric acid, calcination of the bleached hydrated titanium oxide to titanium hydroxide, and removal over moist activated carbon of sulphur from the $SO_2$-containing waste gases produced in the process, thus forming 5 to 20% sulphuric acid, characterised in that the 5 to 20% sulphuric acid formed during removal of sulphur from the waste gases is used for bleaching, together with industrially pure concentrated sulphuric acid.

2. A method according to claim 1, characterised in that 10 to 50% of the sulphuric acid is used in the form of the 5 to 20% sulphuric acid.

**Revendications**

1. Procédé pour la fabrication de dioxyde de titane par attaque de matières premières contenant du titane par l'acide sulfurique, hydrolyse du sulfate de titanyle ainsi formé, séparation de l'acide sulfurique contenant des sulfates métalliques de l'oxyde de titane hydraté formé dans l'hydrolyse, blanchiment de l'oxyde de titane hydraté par traitement réducteur en présence d'acide sulfurique, calcination de l'oxyde de titane hydraté blanchi en dioxyde de titane et désulfuration des gaz résiduaires du procédé contenant $SO_2$ sur du charbon actif humide avec formation d'acide sulfurique à 5-20 %, caractérisé en ce que l'on utilise comme acide sulfurique dans le blanchiment l'acide sulfurique à 5-20 % formé dans la désulfuration des gaz résiduaires en même temps que de l'acide sulfurique concentré de pureté technique.

2. Procédé selon la revendication 1, caractérisé en ce que l'on utilise 10 à 50 % de l'acide sulfurique sous la forme de l'acide sulfurique à 5-20 %.